# EUROPÄISCHE PATENTSCHRIFT

(11) **EP 2 673 858 B1**
(45) Veröffentlichungstag und Bekanntmachung des Hinweises auf die Patenterteilung: **22.01.2020**
(21) Anmeldenummer: 12702501.3
(22) Anmeldetag: 01.02.2012
(51) Int. Cl.: H02G 5/06

(54) **ISOLATORANORDNUNG**
ISOLATOR ARRANGEMENT
ENSEMBLE ISOLATEUR

(30) Priorität: 07.02.2011 DE 102011003683
(43) Veröffentlichungstag der Anmeldung: 18.12.2013
(73) Patentinhaber: Siemens Aktiengesellschaft, 80333 München (DE)
(72) Erfinder: EHRLICH, Frank, 16562 Hohen Neuendorf (DE); GRONBACH, Peter, 90429 Nürnberg (DE); MILEWSKI, Peter, 12355 Berlin (DE); NEHRING, Thilo, 10629 Berlin (DE)
(86) Internationale Anmeldenummer: PCT/EP2012/051651
(87) Internationale Veröffentlichungsnummer: WO 2012/107333

(56) Entgegenhaltungen:
- EP-A1- 0 572 096
- EP-A1- 0 660 478
- CA-A- 876 354
- DE-A1- 3 110 793
- US-A- 3 629 486
- US-A- 4 096 345
- US-A- 4 132 855
- US-B1- 6 198 039

## Beschreibung

Die Erfindung bezieht sich auf eine Isolatoranordnung mit einem Isolierkörper, in welchem zumindest ein Armaturkörper festgelegt ist und welcher ausgehend von dem Armaturkörper mehrere eine Fläche überspannende Zweige aufweist, wobei zumindest einer der Zweige auf der von der überspannten Fläche abgewandten Seite fallende Oberflächen aufweist, wobei die abgewandte Seite von Senken frei gehalten ist.

Eine Isolatoranordnung ist beispielsweise aus dem US-Patent US 6,198,039 B1 bekannt. Die dortige Isolatoranordnung weist ein zentrisch geführtes Rohr auf, welches als Armaturkörper wirkt. Um das Rohr herum erstreckten sich in radialer Richtung mehrere Zweige eines Isolierkörpers, um die bekannte Isolatoranordnung an einer Innenwandung eines weiteren Rohres abzustützen. Der Isolierkörper weist aus dielektrischen Gründen Abrundungen auf. Zur Verlängerung von Kriechwegen ist der Isolierkörper von Ausnehmungen durchsetzt. Dies hat zur Folge, dass sich in Ecken Verunreinigungen an dem Isolierkörper ablagern können, welche sich nicht mehr selbständig von der Isolatoranordnung lösen. Somit erhöht sich die Gefahr einer Ausbildung von unerwünschten Kriechstrompfaden.

Aus dem Patent US 4,096,345 geht eine Isolatoranordnung hervor, welche eine zentrische Ausnehmung zur Aufnahme eines Phasenleiters aufweist. Von der zentrischen Ausnehmung ragen mehrere Zweige strahlenförmig ab. Aus der Europäischen Offenlegungsschrift EP 0 660 478 A1 geht hervor, eine Isolatoranordnung mit mehreren Isolierkörpern auszustatten, welche jeweils U-förmig ausgestaltet sind.

Aus der Offenlegungsschrift DE 31 10 793 A1 geht eine kombinierte dreiphasige gasisolierte elektrische Vorrichtung hervor. Dort ist vorgesehen, dass die Hochspannungsleiter jeder der Phasen aus zwei Richtungen durch isolierende Stäbe unterstützt werden. Bei jedem der isolierenden Stäbe ist ein Ende fest mit dem jeweiligen Hochspannungsleiter verbunden, während das andere Ende an einem zugehörigen Sitz befestigt ist. Die Hochspannungsleiter der drei Phasen sind auf den Ecken eines Dreiecks angeordnet, von denen jede in einer zugehörigen Seite eines größeren Dreiecks liegt, wobei jede dieser Seiten im Wesentlichen durch zwei isolierende Stäbe gebildet ist.

Dem Patent US 4,132,855 ist eine Isolatoranordnung entnehmbar, welche zentrisch einen Phasenleiter führt, wobei der dortige Isolierkörper verschiedene Zweige aufweist, welche eine radiale Abstützung des Phasenleiters zentrisch zwischen den Zweigen bewirken.

Der Offenlegungsschrift CA 876354 A ist eine Isolatoranordnung entnehmbar, welche zentrisch einen Phasenleiter führt, wobei von dem Phasenleiter ausgehend sich mehrere Zweige in radialen Richtungen erstrecken.

Aus dem Patent US 3,629,486 ist ein scheibenförmiges Ausgestalten eines Isolierkörpers einer Isolatoranordnung entnehmbar.

Somit ergibt sich als Aufgabe der Erfindung eine Isolatoranordnung anzugeben, welche eine geringe Neigung zur Ausbildung von Kriechstrompfaden aufweist.

Erfindungsgemäß wird die Aufgabe bei einer Isolatoranordnung der eingangs genannten Art dadurch gelöst, dass mehrere Armaturkörper an dem Isolierkörper festgelegt sind, wobei ein erster von einem ersten Armaturkörper fortragender Zweig und ein zweiter von einem zweiten Armaturkörper fortragender Zweig einen gemeinsamen Anschlagpunkt aufweisen und mehrere Armaturkörper in einer Achsrichtung fluchtend hintereinander liegen und die Achsrichtung parallel zu einer Seite eines Rechtecks liegt, dessen Eckpunkte durch vier Anschlagpunkte des Isolierkörpers definiert sind.

Ein Isolierkörper dient einer Trennung verschiedener elektrischer Potentiale voneinander. Beispielsweise können mittels einer Isolatoranordnung spannungsführende Elemente an einem Träger abgestützt werden, ohne dass eine Potentialübertragung erfolgt. Ein Isolierkörper sollte dazu eine mechanische Widerstandsfähigkeit aufweisen, so dass entsprechende Haltekräfte aufgenommen werden können. Isolierkörper können beispielsweise Kunststoffe oder Harze aufweisen, welche über eine ausreichende elektrische Isolationsfestigkeit verfügen.

Zur Ausbildung einer Isolatoranordnung kann ein Armaturkörper an dem Isolierkörper festgelegt werden. Der Armaturkörper kann beispielsweise aus einem elektrisch leitenden Material, z. B. einem Metall geformt werden. Über den Armaturkörper können Kräfte großflächig in den Isolierkörper eingeleitet werden. Der Isolierkörper kann beispielsweise dauerhaft winkelstarr mit dem Armaturkörper verbunden sein. Eine Ausformung mehrerer Zweige an dem Isolierkörper ermöglicht bei reduziertem Materialeinsatz große Flächen zu überspannen. Damit kann die Isolatoranordnung an einem freien Ende des Zweiges abgestützt sein und entfernt von dem dortigen Anschlagpunkt eine elektrisch isolierte Stützwirkung zum Armaturkörper entfalten. Ein Anschlagpunkt kann dabei in der von der Isolatoranordnung überspannten Fläche selbst liegen, oder auch außerhalb der Fläche angeordnet werden. Ein Zweig kann beispielsweise strahlenförmig von einem Armaturkörper fortlaufen. Neben einem linear gestreckten strahlenförmigen Verlauf können Zweige auch gekrümmt ausgeführt sein.

Sofern man zumindest einer der Zweige, insbesondere alle Zweige, mit fallenden Oberflächen ausstattet, können in Einbaulage Partikel von den fallenden Oberflächen abgleiten/abtropfen und in Richtung der Fläche fortgeleitet werden. Fallende Oberflächen sind beispielsweise durch konvexe Wölbungen (positiv gekrümmte Oberflächen) und/oder fallende Ebenen erreichbar. Insbesondere haben sich pult- oder sattelartige Formgebungen bewährt. Die fallenden Oberflächen sollten jedoch derart geformt sein, dass Senken auf der von der überspannten Fläche abgewandten Seite vermieden ist. Damit ist eine abtropf- bzw. abgleitfreundliche Oberfläche an dem Zweig gegeben. Insbesondere an Anschlussstellen, Stossstellen etc. des Zweiges sollte die Formgebung mit fallenden Oberflächen fortgeführt werden, um gerade in derartigen Bereichen eine Ausbildung von Senken zu verhindern. Senken sind konkav (negativ) gekrümmte Bereiche von Oberflächen, in welchen sich in Einbaulage schwerkraftgetrieben Partikel sammeln. Derartige Senken öffnen sich zu der von der überspannten Fläche abgewandten Seite. Die fallenden Flächen treiben schwerkraftgetrieben Partikel in Randbereiche des Isolierkörpers, so dass Partikel von dem Isolierkörper herunterfallen. Die sich unterhalb der fallenden Flächen befindlichen Oberflächenbereiche können verschiedenartig ausgeformt sein. So können beispielsweise hohlkehlenartige Querschnitte, rautenförmige Querschnitte sowie beliebig geformte Querschnitte zur Ausbildung der Zweige verwendet werden. Der Querschnitt sollte dabei derart gestaltet sein, dass ein Lösen von Partikeln von der Oberfläche des Isolierkörpers befördert wird. Beispielsweise können sogenannte Abreißkanten angeformt sein, von welchen Partikel leicht herabgleiten und von dem Isolierkörper lösen. Abreißkanten können beispielsweise einen Übergang von fallenden Flächen zu unterhalb der fallenden Flächen befindlichen Oberflächenbereichen darstellen.

Weiter kann vorteilhaft vorgesehen sein, dass ein erster und ein zweiter Zweig ausgehend von dem Armaturkörper im Wesentlichen in entgegengesetzte Richtungen fortragen.

Ein entgegengesetzt gerichtetes Forttragen der Zweige von einem Armaturkörper ermöglicht einerseits den Armaturkörper möglichst weit voneinander beabstandet an Anschlagpunkten zu fixieren. Weiter können Kräfte in verschiedene Richtungen fortgeleitet werden. Insbesondere bei einem rahmenartigen Umfassen des Armaturkörpers durch den Isolierkörper können Kräfte aus dem Armaturkörper großflächig in den Isolierkörper eingekoppelt werden. Die sich anschließenden Zweige unterstützen eine Ausbildung eines starren Isolierkörpers, der bei geringer Masse hohe Kräfte aufnehmen kann.

Eine weitere vorteilhafte Ausgestaltung kann vorsehen, dass der Zweig einen etwa dreikantförmigen Querschnitt mit gerundeten Kanten aufweist.

Ein dreikantförmiger Querschnitt weist eine hohe Verwindungssteifigkeit auf. Somit können bei geringen äußeren Abmaßen hohe Kräfte über dreikantförmige Zweige übertragen werden. Gerundete Körperkanten sind dielektrisch günstig geformt und verhindern ein Entstehen von Senken auf einer Oberfläche eines Zweiges. Vorteilhaft sollte ein dreikantförmiger Querschnitt über der überspannten Fläche pult- oder sattelförmige Oberflächen ausbilden, um Senken an den Zweigen zu verhindern.

Weiter kann vorteilhaft vorgesehen sein, dass der Zweig sich zu einem von dem Armaturkörper abgewandten Ende verjüngt.

Ein verjüngtes Zulaufen eines Zweiges führt zu einer Material- und Massereduktion an der Isolieranordnung. Es kann so mit einem überschaubaren Materialaufwand eine große Stützweite zwischen Anschlagpunkten der Isolatoranordnung erzielt werden. Innerhalb des Zweiges kann eine kontinuierliche oder auch stufenweise Querschnittsreduzierung zum freien Ende eines Zweiges vorgesehen sein.

Weiter kann vorteilhaft vorgesehen sein, dass an einem von dem Armaturkörper abgewandten Ende des Zweiges ein Anschlagpunkt zur Abstützung der Isolatoranordnung über der Fläche angeordnet ist.

Eine Anordnung eines Anschlagpunktes ermöglicht eine winkelstarre Fixierung der Isolatoranordnung beispielsweise an einem Gehäuse oder Traggestell. Eine endseitige Anordnung an einem Zweig bietet die Möglichkeit entfernt vom Armaturkörper eine Abfangung der Isolatoranordnung vorzunehmen.

Nutzt man freie Enden mehrerer Zweige, so ergibt sich am Umfang der Isolatoranordnung eine Abstützung derselben an mehreren Punkten. Damit können Kräfte auf vielen Punkten verteilt werden. Somit ist eine Möglichkeit geschaffen, einen mehrere Zweige aufweisenden filigranen Isolierkörper zu verwenden. Die Anschlagpunkte können derart positioniert sein, dass eine Abstützung in einer gemeinsamen Ebene erfolgt. Insbesondere für Sonderbauten kann in diesem Falle eine günstige Anpassung der Isolatoranordnung vorgenommen werden. Je nach Anzahl der Zweige sowie der durch die Isolatoranordnung abzufangenden Kräfte kann die Anzahl der Anschlagpunkte variieren. Es sollte die Nutzung mindestens eines Anschlagpunktes vorgesehen sein.

Die Isolieranordnung kann abgestützt im Randbereich eine Fläche dachartig freitragend überspannen, wobei der Armaturkörper über die Zweige beanstandet zu den Abstützpunkten gehalten ist.

Eine Anordnung von vier Anschlagspunkten an Eckpunkten eines Rechteckes ermöglicht der Isolatoranordnung eine Grundstruktur zu geben. Die Gesamtanzahl der Anschlagspunkte kann dabei größer als vier sein. Rechteckig liegende Anschlagspunkte gestatten die Isolieranordnung beispielsweise an rechteckigen Gehäusen festzulegen.

Vorteilhaft kann weiter vorgesehen sein, dass der Isolierkörper an zumindest einer Seite, insbesondere an zwei gegenüberliegenden Seiten des Rechtecks, die Seite(n)des Rechteckes durchbricht.

Durch vier rechteckig liegende Anschlagspunkte ist eine Grundstruktur für die Befestigung der Isolatoranordnung gegeben, jedoch kann eine "gedachte" Seite des Rechteckes von dem Isolierkörper durchbrochen werden. Der Isolierkörper erstreckt sich über das von Anschlagpunkten definierte Rechteck hinaus. Beispielweise können gekrümmte Abschnitte des Isolierkörpers auch Seiten eines Rechteckes übertragen. Beispielsweise können zur mechanischen Versteifung Zweige zumindest abschnittsweise aus dem Rechteck herausragen. Weiter kann durch eine derartige Formgebung zur Verfügung stehender Bauraum verbessert ausgelastet werden. Die Seite kann auch von einem Armaturkörper überragt sein.

Vorteilhaft kann vorgesehen sein, dass der Isolierkörper an zumindest einer Seite, insbesondere an zwei gegenüberliegenden Seiten des Rechtecks, tailliert hinter eine Seite des Rechteckes zurückgezogen ist.

Ein taillierter Isolierkörper gestattet es einen zentralen Bereich der Isolatoranordnung einzuschnüren und endseitig liegende Bereiche zu erweitern. Somit kann eine Taillierung in dem Bereich des Isolierkörpers vorgesehen sein, in welchem eine Anordnung von Anschlagpunkten gerade nicht vorgesehen ist. Ausgehend von dem querschnittsreduzierten eingeschnürten Abschnitt erweitert sich die Isolatoranordnung in entgegengesetzte Richtungen. Die beidseitigen Erweiterungen sollten möglichst spiegelsymmetrisch ausgeführt sein. So kann die Isolatoranordnung eine sanduhrförmige Silhouette aufweisen, wobei die Isolatoranordnung sich im Wesentlichen eben erstrecken sollte.

Weiterhin kann vorteilhaft vorgesehen sein, dass mehrere Armaturkörper an dem Isolierkörper festgelegt sind, wobei ein erster von einem ersten Armaturkörper fortragender Zweig und ein zweiter von einem zweiten Armaturkörper fortragender Zweig einen gemeinsamen Anschlagpunkt aufweisen.

Laufen zwei unabhängige Zweige ausgehend von zwei voneinander verschiedenen Armaturkörpern auf einen gemeinsamen Anschlagpunkt zu, kann eine zusätzliche gegenseitige Stabilisierung der Zweige untereinander erfolgen. Weiter wird die Anzahl der Anschlagpunkte reduziert. Bei einer gemeinsamen Nutzung verschiedener Anschlagpunkte können sich kreuzende Bahnen der Zweige ergeben, wodurch die Stabilisierung des Isolierkörpers weiter unterstützt wird. Vorteilhaft sollten zwischen Armaturkörpern keine direkten Verbindungen über Zweige bestehen, um eine Ausbildung von Kriechstrompfaden zwischen den Armaturkörpern zu erschweren. Eine Verbindung zwischen Armaturkörpern sollte über Zweige gegeben sein, welche gemeinsam an einem Anschlagpunkt münden.

Weiterhin kann vorteilhaft vorgesehen sein, dass der Isolierkörper mehrere Zweige und mehrere Anschlagpunkte aufweist, wobei an jedem der Anschlagpunkte zumindest zwei Zweige enden, die von verschiedenen Armaturkörpern auf die Anschlagpunkte zulaufen.

Die Zweige dienen einer beabstandeten Abstützung mehrerer Armaturkörper der Isolatoranordnung über Anschlagpunkte. Eine Nutzung eines Anschlagpunktes stets für mehrere Zweige führt zu einem winkelstarren Isolierkörper, dessen Zweige von unterschiedlichen Armaturkörpern zu gemeinsamen Anschlagpunkten streben.

Weiter kann vorteilhaft vorgesehen sein, dass mehrere Armaturkörper in einer Achsrichtung fluchtend hintereinander liegen und die Achsrichtung parallel zu einer Seite eines Rechtecks liegt, dessen Eckpunkte durch vier Anschlagpunkte des Isolierkörpers definiert sind.

Eine lineare Ausrichtung mehrerer Armaturkörper ermöglicht es mehrere Baugruppen bei geringer Beabstandung zueinander an derselben Isolatoranordnung zu befestigen. Die Baugruppen können beispielsweise mit den Armaturkörpern verbunden sein und über den Isolierkörper gegeneinander elektrisch isoliert sein. Eine fluchtende Ausrichtung zu einer Seite des Rechteckes ermöglicht eine lotrechte Lage der einzelnen Baugruppen zueinander.

Eine weitere vorteilhafte Ausgestaltung kann vorsehen, dass der Armaturkörper auf der von der Fläche abgewandeten Seite eine als Teilchenfalle wirkende Kavität aufweist.

Eine Kavität stellt eine Ausnehmung im Armaturkörper dar. Die Wandungen der Kavität sollten elektrisch leitfähige Oberflächen aufweisen, so dass ein elektrisches Potential übertragen werden kann. Entsprechend des elektrischen Potentials stellt sich innerhalb der Kavität ein feldfreier Raum ein, in welchem Teilchen aufgenommen werden können. So ist es beispielsweise möglich von der Oberfläche des Isolierkörpers abtropfende/abgleitende Partikel in die Kavität des Armaturkörpers einzuleiten und dort feldfrei zwischenzulagern.

Vorteilhaft kann weiter vorgesehen sein, dass der Armaturkörper ein rotationssymmetrischer Körper ist.

Rotationssymmetrische Körper sind vereinfacht zu fertigen. Weiterhin beeinflussen sie eine elektrische Feldverteilung positiv.

Es kann vorteilhaft vorgesehen sein, dass eine Teilchenfalle als in sich geschlossen umlaufende Ringnut im Armaturkörper ausformt ist.

In rotationssymmetrischen Körpern sind umlaufende Ringnuten leicht zu integrieren. Durch ihren Umlauf bieten derartige Kavitäten ein großes Volumen zur Zwischenspeicherung von Teilchen. Weiter ist eine Aufnahme von Teilchen aufgrund des Umlaufs aus vielen Richtungen möglich.

Weiter kann vorteilhaft vorgesehen sein, dass Rotationsachsen mehrerer Armaturkörper parallel angeordnet und quer zu deren Achsverläufen fluchtend zueinander ausgerichtet sind.

Achsparallele Ausrichtungen die fluchtend angeordnet sind, wobei eine Deckungsgleichheit der Achsen ausgeschlossen ist, ermöglicht eine lineare Anordnung von mehreren Armaturkörpern an der Isolierkörperanordnung. Insbesondere eine parallele Ausrichtung der Abfolge von Armaturkörpern zu einer Seite eines Rechteckes (insbesondere eines durch Anschlagpunkte definierten Rechteckes) ermöglicht einen modularen Aufbau einer Isolatoranordnung. Die Rotationsachsen sollten voneinander beabstandet parallel zueinander in einer gemeinsamen Ebene liegen.

Die Armaturkörper sollten vorzugsweise jeweils gleichartig ausgebildet sein, wobei die Lage der Armaturkörper an der Isolatoranordnung vorzugsweise achsgleich erfolgen sollte, d. h., beispielsweise bei der Verwendung von rotationssymmetrischen Armaturkörpern, dass die Rotationsachse der Armaturkörper parallel zueinander ausgerichtet sind. Alternativ formuliert: Grundflächen der Armaturkörper sind parallel zueinander ausgerichtet. An der Grundfläche können beispielsweise weitere Bauteile befestigt werden. Ein Versatz der Armaturkörper zueinander ermöglicht es, eine verbesserte Raumnutzung, beispielsweise in konisch geformten Gefäßen vorzusehen, so dass beispielsweise durch einen Versatz ein Armaturkörper in einen konisch verjüngten Abschnitt hineinragen kann.

Im Folgenden wird ein Ausführungsbeispiel der Erfindung schematisch in einer Zeichnung gezeigt und nachfolgend näher beschrieben.

Dabei zeigt die
- Figur 1: eine perspektivische Ansicht einer ersten Isolatoranordnung, die
- Figur 2: einen Schnitt durch die erste Isolatoranordnung und die
- Figur 3: eine perspektivische Ansicht einer zweiten Isolatoranordnung.

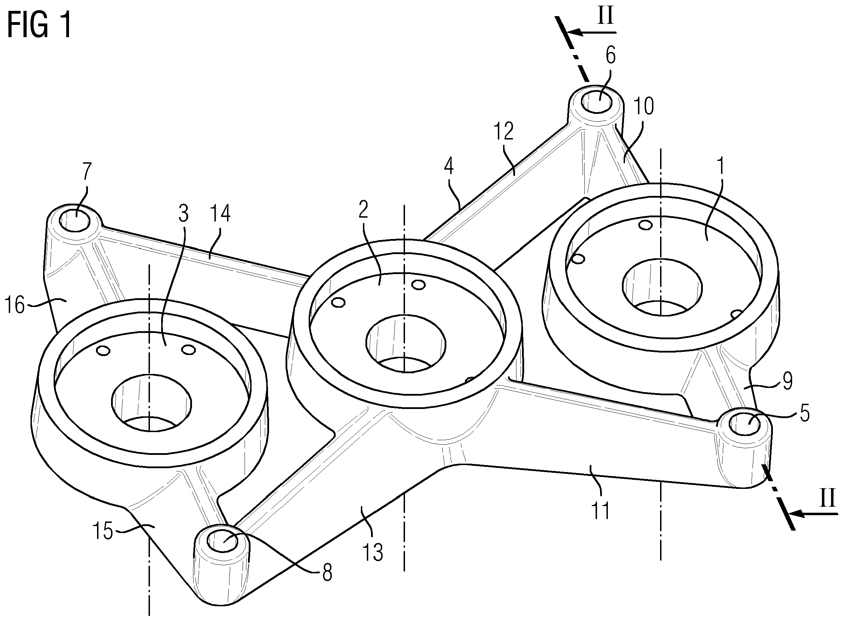

Die Figur 1 zeigt eine erste Isolatoranordnung. Die Isolatoranordnung weist einen ersten, zweiten und einen dritten Armaturkörper 1, 2, 3 auf. Die Armaturkörper 1, 2, 3 sind jeweils gleichartig aufgebaut. Die drei Armaturkörper sind winkelstarr mit einem Isolierkörper 4 verbunden.

Exemplarisch wird im Folgenden der Aufbau des ersten Armaturkörpers 1 beschrieben. Der erste Armaturkörper 1 ist rotationssymmetrisch ausgestaltet. Zentrisch ist eine Ausnehmung mit kreisförmigem Querschnitt angeordnet. Mantelseitig ist der erste Armaturkörper 1 vollständig von dem Isolierkörper umgeben.

Die Rotationsachse des ersten Armaturkörpers 1 ist parallel zu den Rotationsachsen des zweiten und dritten Armaturkörpers 2 und 3 ausgerichtet. Die Rotationsachsen sind voneinander beabstandet angeordnet und liegen in einer gemeinsamen Ebene, so dass die Armaturkörper entlang einer Linie fluchtend hintereinander liegend ausgerichtet sind.
Die Rotationsachsen der Armaturkörper 1, 2, 3 durchstoßen eine Fläche, über welcher sich die Isolatoranordnung aufspannt. Der Isolierkörper 4 der Isolatoranordnung überspannt die Fläche. Zu einer Positionierung der Isolatoranordnung weist der Isolierkörper 4 einen ersten, einen zweiten, einen dritten und einen vierten Anschlagpunkt 5, 6, 7, 8 auf. Die Anschlagpunkte 5, 6, 7, 8 definieren die Eckpunkte eines Rechteckes. Die Ebene, in welcher die Rotationsachsen der Armaturkörper 1, 2, 3 liegen, ist parallel zu den Längsseiten des Rechteckes ausgerichtet. Zu jedem der Anschlagpunkte 5, 6, 7, 8 ragen jeweils zwei Zweige des Isolierkörpers 4. Die Zweige verbinden den jeweiligen Anschlagpunkt 5, 6, 7, 8 auf direkter Strecke mit zwei voneinander verschiedenen Armaturkörpern 1, 2, 3.

Von dem ersten Armaturkörper 1 ausgehend erstreckt sich ein erster Zweig 9 zu dem ersten Anschlagpunkt 5 und ein zweiter Zweig 10 zu dem zweiten Anschlagpunkt 6. Der erste und der zweite Zweig 9, 10 ragen im Wesentlichen entgegengesetzt zueinander von dem ersten Armaturkörper 1 fort.

Von dem zweiten Armaturkörper 2 ausgehend erstreckt sich ein dritter Zweig 11 zu dem ersten Anschlagpunkt 5 und ein vierter Zweig 12 zu dem zweiten Anschlagpunkt 6. Weiter erstreckt sich ein fünfter Zweig 13 zu dem vierten Anschlagpunkt 8 und ein sechster Zweig 14 zu dem dritten Anschlagpunkt 7. Ausgehend von dem zweiten Armaturkörper 2 erstrecken sich der dritte und der sechste Zweig 11, 14 sowie der vierte und fünfte Zweig 12, 13 im Wesentlichen in entgegengesetzten Richtungen.

Am dritten Armaturkörper 3 sind ein siebter Zweig 15 sowie ein achter Zweig 16 angeordnet, welche ausgehend von dem dritten Armaturkörper 3 im Wesentlichen in entgegengesetzten Richtungen zum dritten bzw. vierten Anschlagpunkt 7, 8 fortragen.

Jeder der Zweige 9, 10, 11, 12, 13, 14, 15, 16 stellte eine direkte Verbindung zwischen einem Armaturkörper 1, 2, 3 und einem Anschlagpunkt 5, 6, 7, 8 dar. Eine Verbindung der Armaturkörper 1, 2, 3 über den Isolierkörper 4 ist jeweils ausschließlich über jeweils einen Anschlagpunkt 5, 6, 7, 8 gegeben. Eine unmittelbare Verbindung über einen Zweig zwischen Armaturkörpern 1, 2, 3 ist nicht gegeben. Jedem der Armaturkörper 1, 2, 3 sind jeweils zumindest zwei Zweige zugeordnet, welche in entgegengesetzten Richtungen von dem jeweiligen Armaturkörper 1, 2, 3 fortragen und mit ihrem freien Ende jeweils an (voneinander verschiedenen) Anschlagpunkten 5, 6, 7, 8 enden.

Der Isolierkörper 4 ist vorliegend plattenartig gestaltet, wobei die einzelnen Zweige sich im Wesentlichen in einer Ebene erstrecken. Der Isolierkörper 4 überspannt eine Fläche. Auf der von der Fläche abgewandten Seite ist der Isolierkörper 4, insbesondere seine Zweige 9, 10, 11, 12, 13, 14, 15, 16 ausschließlich mit fallenden Oberflächen ausgestattet, so dass auftreffende Partikel schwerkraftgetrieben zu Randbereichen des Isolierkörpers 4 geleitet werden und dort von dem Isolierkörper 4 abtropfen/abgleiten. Partikel können in Richtung der überspannten Fläche oder in Richtung der Armaturkörper 1, 2, 3 abgelenkt werden. Vorzugsweise sollten die Zweige nach Art eines Dreikants geformt sein, so dass über der Fläche an den Zweigen ein Sattel bzw. ein Pult gebildet ist, von welchem Partikel abgleiten können. Die von der Fläche abgewandten Bereiche sind dabei frei von Senken, in welchen sich unerwünschte Ablagerungen ansammeln könnten. Insbesondere Stoßstellen und Übergangsstellen der Zweige 9, 10, 11, 12, 13, 14, 15, 16, beispielsweise an den Armaturkörpern 1, 2, 3, sind stets so gestaltet, dass auch dort Senken vermieden sind. Die Armaturkörper 1, 2, 3 ummantelnde Rahmen sind ebenfalls mit fallenden Deckflächen ausgestattet, so dass Partikel dort nicht haften bleiben können.

Der Querschnitt der Zweige 9, 10, 11, 12, 13, 14, 15, 16 kann ausgehend von den Armaturkörpern 1, 2, 3 hin zu den Anschlagpunkten kontinuierlich oder stufenweise reduziert werden.

Die vier Anschlagpunkte 5, 6, 7, 8 definieren ein Rechteck. Seiten des Rechteckes sind von Zweigen 15, 16, 9, 10, welche einer Halterung der außenliegenden Armaturkörper 1, 3 dienen, durchbrochen. Ebenso durchstoßen die außenliegenden Armaturkörper 1, 3 Seiten des Recheckes. Weiterhin ist die Isolatoranordnung tailliert ausgeführt, d. h., mittig sind Zweige 11, 13, 12, 14 hinter Seiten des Rechteckes zurückgezogen.

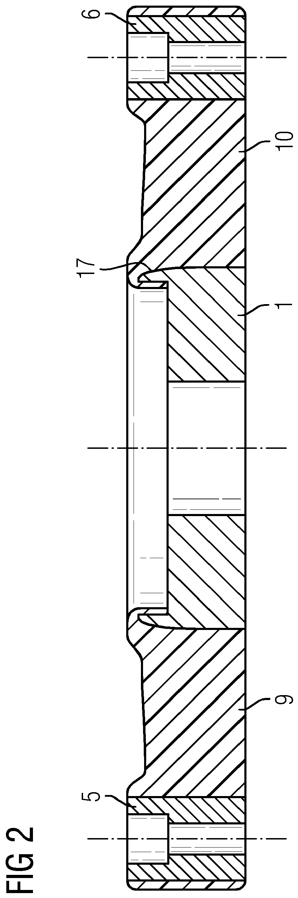

Anhand der Figur 2 wird im Weiteren beispielhaft die Ausführung der Anschlagpunkte 5, 6, 7. 8 sowie der Armaturkörper 1, 2, 3 näher erläutert.

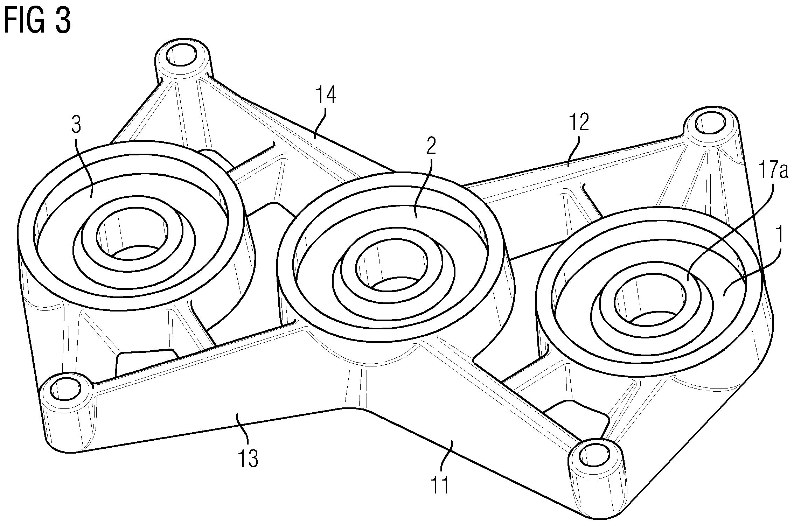

In der Figur 2 ist ein Schnitt durch die aus der Figur 1 bekannte Isolatoranordnung gezeigt. Der erste Armaturkörper 1 ist als metallischer Gusskörper ausgeführt, wobei der ersten Armaturkörper 1 rotationssymmetrisch zu einer Rotationsachse ausgeführt ist. Mantelseitig ist der erste Armaturkörper 1 von dem Isolierkörper 4 gefasst. Auf seiner von der durch den Isolierkörper überspannten Fläche abgewandten Seite ist der erste Armaturkörper 1 mit einer vorspringenden Ringschulter 17 versehen, die von Isoliermaterial des Isolierkörpers 4 überdeckt ist. Aufgrund des metallischen Materials der Armaturkörper 1, 2, 3 schirmt die Ringschulter 17 einen stirnseitigen Bereich der jeweiligen Armaturkörper 1, 2, 3. Somit ist dort ein feldfreier Raum geschaffen, in welchem Partikel gesammelt werden können. Bei einem Verschluss der Ausnehmungen in den Armaturkörpern, beispielsweise mit einem kreiszylindrischen Körper, ist so eine umlaufend Ringnut gebildet, in welcher feldfrei Teilchen zwischengelagert werden können. Zur Verbesserung der Wirkung der Teilchenfalle kann die zentrische Ausnehmung von einer weiteren Ringschulter 17a (vgl. Fig. 3) umgeben sein.
Der erste Armaturkörper 1 ist von einer zentrischen Ausnehmung durchsetzt, so dass stirnseitig jeweils kreisringförmige Anpressflächen am ersten Armaturkörper 1 ausgebildet sind. Die Anpressflächen können weiterhin mit einer Profilierung versehen sein. An den Anpressflächen sind beispielsweise isoliert zu haltende Bauteile abstützbar. So kann beispielsweise eine Unterbrechereinheit eines Leistungsschalters mit dem ersten Armaturkörper 1 verbunden werden. Durch die zentrische Ausnehmung können beispielsweise Antriebsstangen oder ähnliches für die Unterbrechereinheit geführt werden.

Die Anschlagpunkte 5, 6, 7, 8 sind jeweils gleichartig ausgeführt. Jeder der Anschlagpunkte 5, 6, 7, 8 verfügt über eine metallische Hülse, welche in den jeweiligen Zweigen 9, 10, 11, 12, 13, 14, 15, 16 des Isolierkörpers 4 eingelassen sind. Durch die Hülsen kann eine Verbolzung geführt sein, mittels welcher ein Anschlagpunkt 5, 6, 7, 8 winkelstarr fixiert wird. Beispielsweise kann die Isolatoranordnung in einem Kapselungsgehäuse festgelegt werden. Vorliegend weist die Hülse jeweils querschnittreduzierte Ausnehmungen auf, so dass beispielsweise ein Schraubenkopf in der Hülse abgestützt werden kann.

Anlageflächen zur Kontaktierung mit weiteren Bauteilen sind jeweils frei von einer Überdeckung durch Isolierstoff. Die Achsen der Hülsen liegen jeweils parallel zueinander und parallel zu den Rotationsachsen der Armaturkörper.

In der Figur 3 ist eine perspektivische Ansicht einer zweiten Isolatoranordnung gezeigt. Die zweite Isolatoranordnung basiert auf der in der Figur 1 gezeigten ersten Isolatoranordnung. Zur Erhöhung der mechanischen Steifigkeit der Zweige weisen der dritte und vierte Zweig 11, 12 und der fünfte und sechste Zweig 13, 14 mittig Querstreben auf, die eine Stabilisierung zu den endseitig liegenden ersten und dritten Armaturkörpern 1, 3 gewährleisten. Damit ist sichergestellt, dass am Umfang jedes der Armaturkörper 1, 2, 3 eine Abstützung an vier Punkten erfolgt. Weiterhin ist eine direkte Verbindung zwischen Armaturkörpern 1, 2, 3 vermieden.

Die Armaturkörper 1, 2, 3 sind um die zentrale Ausnehmung mit einer weiteren Ringschulter 17a versehen. Durch die weitere Ringschulter 17a ist die Wirksamkeit der von der Ringschulter 17 umgebenen Teilchenfalle verbessert.

## Patentansprüche

1. Isolatoranordnung mit einem Isolierkörper (4), in welchem zumindest ein Armaturkörper (1, 2, 3) festgelegt ist und welcher ausgehend von dem Armaturkörper (1, 2, 3) mehrere eine Fläche überspannende Zweige (9, 10, 11, 12, 13, 14, 15, 16) aufweist, wobei
zumindest einer der Zweige (9, 10, 11, 12, 13, 14, 15, 16) auf der von der überspannten Fläche abgewandten Seite fallende Oberflächen aufweist, wobei die abgewandte Seite von Senken frei gehalten ist,
**dadurch gekennzeichnet, dass**
mehrere Armaturkörper (1, 2, 3) an dem Isolierkörper (4) festgelegt sind, wobei ein erster von einem ersten Armaturkörper fortragender Zweig (9, 10, 11, 12, 13, 14, 15, 16) und ein zweiter von einem zweiten Armaturkörper (1, 2, 3) fortragender Zweig (9, 10, 11, 12, 13, 14, 15, 16) einen gemeinsamen Anschlagpunkt (5, 6, 7, 8) aufweisen und mehrere Armaturkörper (1, 2, 3) in einer Achsrichtung fluchtend hintereinander liegen und die Achsrichtung parallel zu einer Seite eines Rechtecks liegt, dessen Eckpunkte durch vier Anschlagpunkte (5, 6, 7, 8) des Isolierkörpers (4) definiert sind.

2. Isolatoranordnung nach Anspruch 1,
**dadurch gekennzeichnet, dass**
ein erster und ein zweiter Zweig (9, 10, 11, 12, 13, 14, 15, 16) ausgehend von dem Armaturkörper (1, 2, 3) im Wesentlichen in entgegengesetzte Richtungen fortragen.

3. Isolatoranordnung nach Anspruch 1 oder 2,
**dadurch gekennzeichnet, dass**
der Zweig (9, 10, 11, 12, 13, 14, 15, 16) einen etwa dreikantförmigen Querschnitt mit gerundeten Kanten aufweist.

4. Isolatoranordnung nach einem der Ansprüche 1 bis 3,
**dadurch gekennzeichnet, dass**
der Zweig (9, 10, 11, 12, 13, 14, 15, 16) sich zu einem von dem Armaturkörper (1, 2, 3) abgewandten Ende verjüngt.

5. Isolatoranordnung nach einem der Ansprüche 1 bis 4,
**dadurch gekennzeichnet, dass**
an einem von dem Armaturkörper (1, 2, 3) abgewandten Ende des Zweiges ein Anschlagpunkt (5, 6, 7, 8) zur Abstützung der Isolatoranordnung (4) über der Fläche angeordnet ist.

6. Isolatoranordnung nach einem der Ansprüche 1 bis 5,
**dadurch gekennzeichnet, dass**
der Isolierkörper (4) an zumindest einer Seite, insbesondere an zwei gegenüberliegenden Seiten des Rechtecks, die Seite(n)des Rechteckes durchbricht.

7. Isolatoranordnung nach einem der Ansprüche 1 bis 6,
**dadurch gekennzeichnet, dass**
der Isolierkörper (4) an zumindest einer Seite, insbesondere an zwei gegenüberliegenden Seiten des Rechtecks, tailliert hinter eine Seite des Rechteckes zurückgezogen ist.

8. Isolatoranordnung nach einem der Ansprüche 1 bis 7,
**dadurch gekennzeichnet, dass**
der Isolierkörper (4) mehrere Zweige (9, 10, 11, 12, 13, 14, 15, 16) und mehrere Anschlagpunkte (5, 6, 7, 8) aufweist, wobei an jedem der Anschlagpunkte (5, 6, 7, 8) zumindest zwei Zweige (9, 10, 11, 12, 13, 14, 15, 16) enden, die von verschiedenen Armaturkörpern (1, 2, 3) auf die Anschlagpunkte (5, 6, 7, 8) zulaufen.

9. Isolatoranordnung nach einem der Ansprüche 1 bis 8,
**dadurch gekennzeichnet, dass**
der Armaturkörper (1, 2, 3) auf der von der Fläche abgewandten Seite eine als Teilchenfalle wirkende Kavität aufweist.

10. Isolatoranordnung nach einem der Ansprüche 1 bis 9,
**dadurch gekennzeichnet, dass**
der Armaturkörper (1, 2, 3) ein rotationssymmetrischer Körper ist.

11. Isolatoranordnung nach Anspruch 10,
**dadurch gekennzeichnet, dass**
eine Teilchenfalle als in sich geschlossen umlaufende Ringnut im Armaturkörper (1, 2, 3) ausformt ist.

12. Isolatoranordnung nach einem der Ansprüche 10 oder 11,
**dadurch gekennzeichnet, dass**
Rotationsachsen mehrerer Armaturkörper (1, 2, 3) parallel angeordnet und quer zu deren Achsverläufen fluchtend zueinander ausgerichtet sind.

## Claims

1. Insulator arrangement having an insulating body (4), in which at least one fitting body (1, 2, 3) is fixed and which has, starting from the fitting body (1, 2, 3), a plurality of branches (9, 10, 11, 12, 13, 14, 15, 16) spanning an area, wherein
at least one of the branches (9, 10, 11, 12, 13, 14, 15, 16) has, on the side remote from the spanned area, surfaces which fall away, with the remote side being kept free of depressions,
**characterized in that**
a plurality of fitting bodies (1, 2, 3) are fixed to the insulating body (4), wherein a first branch (9, 10, 11, 12, 13, 14, 15, 16), which protrudes from a first fitting body, and a second branch (9, 10, 11, 12, 13, 14, 15, 16), which protrudes from a second fitting body (1, 2, 3), have a common stop (5, 6, 7, 8) and a plurality of fitting bodies (1, 2, 3) are positioned one behind the other, aligned, in an axial direction, and the axial direction is parallel to one side of a rectangle, whose corner points are defined by four stops (5, 6, 7, 8) of the insulating body (4).

2. Insulator arrangement according to Claim 1,
**characterized in that**
a first and a second branch (9, 10, 11, 12, 13, 14, 15, 16), starting from the fitting body (1, 2, 3), protrude substantially in opposite directions.

3. Insulator arrangement according to Claim 1 or 2,
**characterized in that**
the branch (9, 10, 11, 12, 13, 14, 15, 16) has an approximately triangular cross section with rounded edges.

4. Insulator arrangement according to one of Claims 1 to 3,
**characterized in that**
the branch (9, 10, 11, 12, 13, 14, 15, 16) tapers towards an end remote from the fitting body (1, 2, 3).

5. Insulator arrangement according to one of Claims 1 to 4,
**characterized in that**,
at one end of the branch remote from the fitting body (1, 2, 3), a stop (5, 6, 7, 8) is arranged for supporting the insulator arrangement (4) over the area.

6. Insulator arrangement according to one of Claims 1 to 5,
**characterized in that**
the insulating body (4) breaches the side(s) of the rectangle on at least one side, in particular on two opposite sides of the rectangle.

7. Insulator arrangement according to one of Claims 1 to 6,
**characterized in that**
the insulating body (4) is drawn back, in tapered fashion, behind one side of the rectangle on at least one side, in particular on two opposite sides of the rectangle.

8. Insulator arrangement according to one of Claims 1 to 7,
**characterized in that**
the insulating body (4) has a plurality of branches (9, 10, 11, 12, 13, 14, 15, 16) and a plurality of stops (5, 6, 7, 8), wherein at least two branches (9, 10, 11, 12, 13, 14, 15, 16) end at each of the stops (5, 6, 7, 8) and taper from different fitting bodies (1, 2, 3) towards the stops (5, 6, 7, 8).

9. Insulator arrangement according to one of Claims 1 to 8,
**characterized in that**
the fitting body (1, 2, 3) has a cavity acting as a particle trap, on the side remote from the area.

10. Insulator arrangement according to one of Claims 1 to 9,
**characterized in that**
the fitting body (1, 2, 3) is a rotationally symmetrical body.

11. Insulator arrangement according to Claim 10,
**characterized in that**
a particle trap is shaped out, as an annular groove running peripherally in closed form, in the fitting body (1, 2, 3).

12. Insulator arrangement according to either of Claims 10 and 11, **characterized in that**
axes of rotation of a plurality of fitting bodies (1, 2, 3) are arranged parallel and are oriented so as to be aligned with respect to one another transversely to the axis profiles of said axes of rotation.

## Revendications

1. Agencement d'isolateur, comprenant une pièce (4) isolante, dans laquelle au moins une pièce (1, 2, 3) d'armature est fixée et qui, en partant de la pièce (1, 2, 3) d'armature, a plusieurs branches (9, 10, 11, 12, 13, 14, 15, 16) recouvrant une face, dans lequel
au moins l'une des branches (9, 10, 11, 12, 13, 14, 15, 16) a, du côté loin de la face recouverte, des surfaces descendantes, le côté loin étant maintenu sans puits,
**caractérisé en ce que**
plusieurs pièces (1, 2, 3) d'armature sont fixées à la pièce (4) isolante, une première branche (9, 10, 11, 12, 13, 14, 15, 16), s'étendant à partir d'une première pièce d'armature, et une deuxième branche (9, 10, 11, 12, 13, 14, 15, 16), s'étendant à partir d'une deuxième pièce (1, 2, 3) d'armature, ayant un point (5, 6, 7, 8) d'arrêt commun, et plusieurs pièce (1, 2, 3) d'armature se trouvant l'une derrière l'autre en alignement dans une direction axiale et la direction axiale étant parallèles à un côté d'un rectangle dont les sommets sont définis par quatre points (5, 6, 7, 8) d'arrêt de la pièce (4) isolante.

2. Agencement d'isolateur suivant la revendication 1,
**caractérisé en ce qu'**
une première et une deuxième branche (9, 10, 11, 12, 13, 14, 15, 16) s'étendent en partant de la pièce (1, 2, 3) d'armature sensiblement en sens contraire.

3. Agencement d'isolateur suivant la revendication 1 ou 2,
**caractérisé en ce que**
la branche (9, 10, 11, 12, 13, 14, 15, 16) a une section transversale à peu près en forme de trois bords à bords arrondis.

4. Agencement d'isolateur suivant l'une des revendications 1 à 3,
**caractérisé en ce que**
la branche (9, 10, 11, 12, 13, 14, 15, 16) se rétrécit vers une extrémité loin de la pièce (1, 2, 3) d'armature.

5. Agencement d'isolateur suivant l'une des revendications 1 à 4,
**caractérisé en ce qu'**
à une extrémité, loin de la pièce (1, 2, 3) d'armature, de la branche est disposé un point (5, 6, 7, 8) d'arrêt pour l'appui de l'agencement (4) d'isolateur par la face.

6. Agencement d'isolateur suivant l'une des revendications 1 à 5,
**caractérisé en ce que**
la pièce (4) isolante transperce, sur au moins un côté, notamment sur deux côtés opposés, du rectangle, le ou les côtés du rectangle.

7. Agencement d'isolateur suivant l'une des revendications 1 à 6,
**caractérisé en ce que**
le corps (4) isolant est, au moins d'un côté, notamment sur deux côtés opposés du rectangle, en retrait, de manière proportionnée, derrière un côté du rectangle.

8. Agencement d'isolateur suivant l'une des revendications 1 à 7,
**caractérisé en ce que**
la pièce (4) isolante a plusieurs branches (9, 10, 11, 12, 13, 14, 15, 16) et plusieurs points (5, 6, 7, 8) d'arrêt, dans lequel, en chacun des points (5, 6, 7, 8) d'arrêt, finissent au moins deux branches (9, 10, 11, 12, 13, 14, 15, 16), qui vont de pièces (1, 2, 3) d'armature différentes aux points (5, 6, 7, 8) d'arrêt.

9. Agencement d'isolateur suivant l'une des revendications 1 à 8,
**caractérisé en ce que**
la pièce (1, 2, 3) d'armature a, du côté loin de la face, une cavité servant de piège à particules.

10. Agencement d'isolateur suivant l'une des revendications 1 à 9,
**caractérisé en ce que**
la pièce (1, 2, 3) d'armature est de révolution.

11. Agencement d'isolateur suivant la revendication 10,
**caractérisé en ce qu'**
un piège à particules est conformé en rainure annulaire faisant le tour et fermée sur soi-même de la pièce (1, 2, 3) d'armature.

12. Agencement d'isolateur suivant l'une des revendications 10 ou 11,
**caractérisé en ce que**
des axes de révolution de plusieurs pièces (1, 2, 3) d'armature sont parallèles et sont alignés les uns avec les autres transversalement à leur étendue axiale.
